(19) Europäisches Patentamt
European Patent Office
Office européen des brevets

(11) **EP 3 597 709 A1**

(12) **EUROPEAN PATENT APPLICATION**
published in accordance with Art. 153(4) EPC

(43) Date of publication:
**22.01.2020 Bulletin 2020/04**

(21) Application number: **18766845.4**

(22) Date of filing: **01.03.2018**

(51) Int Cl.:
*C09D 17/00* (2006.01)     *C09D 11/322* (2014.01)

(86) International application number:
**PCT/JP2018/007722**

(87) International publication number:
**WO 2018/168486 (20.09.2018 Gazette 2018/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.03.2017   JP 2017048490**

(71) Applicant: **DIC Corporation**
**Tokyo 174-8520 (JP)**

(72) Inventors:
• **UCHIDA, Rei**
**Kitaadachi-gun**
**Saitama 362-8577 (JP)**
• **SATO, Yoshihiro**
**Kitaadachi-gun**
**Saitama 362-8577 (JP)**

(74) Representative: **Adam, Holger et al**
**Kraus & Weisert**
**Patentanwälte PartGmbB**
**Thomas-Wimmer-Ring 15**
**80539 München (DE)**

(54) **AQUEOUS PIGMENT DISPERSION AND METHOD FOR PRODUCING AQUEOUS PIGMENT DISPERSION**

(57)     A task to be achieved by the present invention is to provide an aqueous pigment dispersion which can be used in the production of an ink having reduced coarse particles so that the ink exhibits excellent dispersibility of the pigment in the aqueous pigment dispersion and excellent storage stability on such a level that a change of the physical properties with time is unlikely to be caused.

The present invention is directed to an aqueous pigment dispersion including: a pigment (A) including C.I. Pigment Orange 43(a) having a primary particle diameter of 150 nm or less; a pigment dispersing resin (B) including a radical polymerization polymer having an acid value of 80 to 150 mg KOH/g; and water (C).

EP 3 597 709 A1

**Description**

Technical Field

The present invention relates to an aqueous pigment dispersion containing C.I. Pigment Orange 43 and a method for producing the same.

Background Art

Inks containing pigments are widely used in printing operations conducted by, for example, an offset printing method, a gravure printing method, a flexographic printing method, a silk screen printing method, or an ink-jet printing method.

Especially, aqueous pigment inks using water as a solvent are, for example, unlikely to ignite and are safe, as compared to conventional organic solvent inks, and therefore studies are made on the use of the aqueous pigment inks in various applications.

As an aqueous pigment dispersion used in the production of the aqueous pigment ink, there has been known one which contains a pigment, a pigment dispersing resin, and an aqueous medium, and the aqueous pigment dispersion is required to have the pigment stably dispersed in the aqueous medium by the pigment dispersing resin.

However, the dispersibility of the pigment contained in the aqueous pigment dispersion varies depending on the type of the pigment, the formulation, and the like and hence, for improving the dispersibility of the aqueous pigment dispersion, there is a need to take measures according to the types of pigments, the formulations of inks and the like.

Meanwhile, in some cases of the printing operation conducted by an ink-jet printing method using an aqueous pigment ink, inks of yellow, magenta, cyan, and black colors, which are basic colors, and inks of green, red, blue, and orange colors and the like, which are called spot colors, are used in combination.

As an aqueous ink using the orange pigment, for example, an ink containing C.I. Pigment Orange 43 has been known (see, for example, PTL 1).

However, the above-mentioned ink has a large volume average particle diameter and further contains a great amount of coarse particles therein, and therefore it is likely that the ink cannot achieve dispersibility on a level comparable to that of the inks and pigment dispersions for basic colors or storage stability on such a level that it is possible to suppress a change of the physical properties with time.

Further, as mentioned above, the dispersibility and storage stability are likely affected by the type of the pigment and an interaction of the pigment with the dispersing resin. Therefore, even when the pigment dispersing resin for use in the pigment dispersion for basic color is merely used in the pigment for spot color, the resultant dispersion using such a combination cannot always exhibit excellent dispersibility, and hence, it is likely that those skilled in the art need to improve the dispersibility of the pigment dispersion for spot color by trial and error.

Citation List

Patent Literature

PTL 1: International Patent Application Publication No. 1999/05230 pamphlet

Summary of Invention

Technical Problem

A task to be achieved by the present invention is to provide an aqueous pigment dispersion which can be used in the production of an ink having reduced coarse particles so that the ink exhibits excellent dispersibility of the pigment in the aqueous pigment dispersion and excellent storage stability on such a level that a change of the physical properties with time is unlikely to be caused.

Solution to Problem

The invention is directed to an aqueous pigment dispersion including: a pigment (A) including C.I. Pigment Orange 43(a) having a primary particle diameter of 150 nm or less; a pigment dispersing resin (B) including a radical polymerization polymer having an acid value of 80 to 150 mg KOH/g; and water (C).

Advantageous Effects of Invention

The aqueous pigment dispersion of the present invention and an ink containing the same have dispersibility on a level comparable to that of the inks and aqueous pigment dispersions for basic colors.

Description of Embodiments

The aqueous pigment dispersion of the invention includes a pigment (A) including C.I. Pigment Orange 43(a) having a primary particle diameter of 150 nm or less; a pigment dispersing resin (B) including a radical polymerization polymer having an acid value of 80 to 150 mg KOH/g; and water (C). The aqueous pigment dispersion means a material having a pigment dispersed in a solvent, such as water. The aqueous pigment dispersion indicates a material used in producing an aqueous pigment ink, or the aqueous pigment ink itself.

In the invention, a pigment (A) comprising C.I. Pigment Orange 43(a) is used.

With respect to the C.I. Pigment Orange 43, one having a primary particle diameter of 150 nm or less is used. By virtue of this, it is possible to achieve dispersibility on a level comparable to that of the inks and aqueous pigment dispersions for basic colors and storage stability on such a level that it is possible to suppress a change of the physical properties with time. Further, the C.I. Pigment Orange 43 having a primary particle diameter of 50 to 130 nm is preferably used, and the C.I. Pigment Orange 43 having a primary particle diameter in the range of 65 to 120 nm is more preferably used in view of further improving the storage stability. A value of the primary particle diameter was measured using the apparatus under the conditions shown below.

A mixture of 1 part by mass of the pigment (A) comprising C.I. Pigment Orange 43(a) and 99 parts by mass of ethanol was first dropwise placed on a mesh having a collodion film and dried to obtain a sample for measurement.

Then, arbitrary 1,000 particles in the sample for measurement were observed using a scanning transmission electron microscope (STEM, JSM-7500FA, manufactured by JEOL Ltd.; accelerating voltage: 30 kV), and an average of the major diameters of the particles was taken as a primary particle diameter.

The C.I. Pigment Orange 43 (a) having a primary particle diameter of 150 nm or less can be produced by subjecting C.I. Pigment Orange 43 having a primary particle diameter of more than 150 nm to, for example, dry grinding, wet grinding, or solvent salt milling. The dry grinding or wet grinding, however, uses beads made of a metal, and therefore highly possibly causes a metal as an impurity to be mixed into the pigment. For this reason, solvent salt milling that is unlikely to cause a metal to be mixed is preferably employed.

The solvent salt milling is a method in which a mixture containing at least a coarse pigment, an inorganic salt, and an organic solvent is milled and ground using a kneading machine, such as a kneader, a two-roll mill, a three-roll mill, or an attritor. In the invention, the C.I. Pigment Orange 43 having a primary particle diameter of more than 150 nm may be defined as a coarse pigment.

With respect to the inorganic salt usable in the solvent salt milling, a water-soluble inorganic salt is preferably used, and, for example, sodium chloride, potassium chloride, sodium sulfate, or the like is preferably used. With respect to the inorganic salt, an inorganic salt having a primary particle diameter of 0.5 to 50 $\mu$m is more preferably used. The amount of the inorganic salt used is preferably 3 to 20 parts by mass, more preferably 5 to 15 parts by mass, relative to 1 part by mass of the coarse pigment.

With respect to the organic solvent usable in the solvent salt milling, an organic solvent capable of suppressing the growth of crystals is preferably used, and, as such an organic solvent, a water-soluble organic solvent can be preferably used, and, for example, diethylene glycol, glycerol, ethylene glycol, propylene glycol, liquid polyethylene glycol, liquid polypropylene glycol, 2-(methoxymethoxy)ethanol, 2-butoxyethanol, 2-(isopentyloxy)ethanol, 2-(hexyloxy)ethanol, diethylene glycol monomethyl ether, diethylene glycol monoethyl ether, diethylene glycol monobutyl ether, triethylene glycol, triethylene glycol monomethyl ether, 1-methoxy-2-propanol, 1-ethoxy-2-propanol, dipropylene glycol, dipropylene glycol monomethyl ether, dipropylene glycol monomethyl ether, dipropylene glycol, or the like can be used.

The amount of the organic solvent is preferably 0.01 to 5 parts by mass, relative to 1 part by mass of the coarse pigment.

The temperature for milling and grinding in the solvent salt milling is preferably 30 to 150°C. The time for milling and grinding is preferably 2 to 20 hours.

By the above-described method, a mixture of the C.I. Pigment Orange 43 (a) having a primary particle diameter of 150 nm or less, the inorganic salt, and the organic solvent can be obtained. When producing the aqueous pigment dispersion and ink of the invention using the mixture, if necessary, the inorganic salt and the organic solvent are removed from the mixture by washing and filtration, followed by drying and grinding, and the resultant material can be used.

In the washing and filtration step, any of washing with water and washing with hot water can be employed. Further, washing may be conducted using an acid, an alkali, or a solvent so as not to change the crystalline state of the C.I. Pigment Orange 43 (a). The washing can be repeated 1 to 5 times. When a water-soluble inorganic salt and a water-soluble organic solvent are used as the inorganic salt and the organic solvent, the water-soluble inorganic salt and water-soluble organic solvent can be easily removed by the washing.

In the drying step, there can be conducted a drying method in a batch-wise manner or a continuous manner in which, for example, the pigment is subjected to dehydration and/or desolvation by heating at 80 to 120°C by a heating source installed in a dryer, or the like. As the dryer, a box dryer, a conveyer band dryer, a spray dryer, or the like can be used.

The grinding step is not a step for increasing the specific surface area of the C.I. Pigment Orange 43(a) or for further reducing the primary particle diameter of the C.I. Pigment Orange 43(a) but a step that may be performed for disintegrating and powdering the C.I. Pigment Orange 43 (a) in a lump form or the like which is caused when, for example, using a box dryer or a conveyer band dryer.

In the grinding step, for example, a mortar, a juicer, a hammer mill, a disc mill, a pin mill, a jet mill, or the like can be used.

The C.I. Pigment Orange 43(a) having a primary particle diameter of 150 nm or less obtained by the solvent salt milling is preferably contained in an amount of 70 to 100 parts by mass, relative to the whole of the pigment (A), in view of obtaining a storage stability effect, and the amount is more preferably as close to 100 parts by mass as possible.

With respect to the pigment dispersing resin (B), a radical polymerization polymer having an acid value of 80 to 150 mg KOH/g is used. By using the radical polymerization polymer having an acid value in the above-mentioned range as the pigment dispersing resin (B), it is possible to obtain an ink-jet recording ink in which the pigment (A) has excellent dispersibility in the aqueous pigment dispersion. With respect to the dispersing resin (B), the radical polymerization polymer having an acid value of 90 to 150 mg KOH/g is preferably used, and the radical polymerization polymer having an acid value of 100 to 130 mg KOH/g is especially preferably used in view of further improving the dispersibility of the pigment (A) in water (C).

It should be noted that the acid value indicates a value as measured by the acid-base titration method described in the Japanese Industrial Standards "K0070:1992, Test method for acid value, saponification value, ester value, iodine value, hydroxyl value, and unsaponifiable matter of chemical products".

With respect to the radical polymerization polymer, one having an aromatic cyclic structure or a heterocyclic structure can be used, one having a benzene ring structure is more preferably used, and one having a structure derived from styrene is further preferably used.

The mass ratio of the structural unit derived from styrene to the radical polymerization polymer is preferably 50 parts by mass or more. The mass ratio is more preferably in the range of 60 to 95 parts by mass in view of obtaining a dispersibility effect.

With respect to the radical polymerization polymer, a polymer obtained by subjecting a monomer or monomers to radical polymerization can be used.

With respect to the monomer, when an aromatic cyclic structure is introduced into the radical polymerization polymer, a monomer having an aromatic cyclic structure can be used, and, when a heterocyclic structure is introduced into the radical polymerization polymer, a monomer having a heterocyclic structure can be used.

With respect to the monomer having an aromatic cyclic structure, for example, styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, $\alpha$-methylstyrene, p-methyl-$\alpha$-methylstyrene, vinylnaphthalene, vinylanthracene, or the like can be used.

With respect to the monomer having a heterocyclic structure, a vinylpyridine monomer, such as 2-vinylpyridine or 4-vinylpyridine, can be used.

When the radical polymerization polymer having both an aromatic cyclic structure and a heterocyclic structure is used, a monomer having an aromatic cyclic structure and a monomer having a heterocyclic structure can be used in combination as the monomer.

With respect to the radical polymerization polymer, as mentioned above, a radical polymerization polymer having a structural unit derived from styrene is preferably used, and therefore, as the monomer, styrene, $\alpha$-methylstyrene, or tert-butylstyrene is more preferably used.

Further, with respect to the monomer usable in the production of the radical polymerization polymer, in addition to those mentioned above, if necessary, other monomers can be used.

With respect to the other monomers, for example, methyl (meth)acrylate, n-propyl (meth)acrylate, isopropyl (meth)acrylate, n-butyl (meth)acrylate, sec-butyl (meth)acrylate, tert-butyl (meth)acrylate, 2-ethylbutyl (meth)acrylate, 1,3-dimethylbutyl (meth)acrylate, hexyl (meth)acrylate, 2-ethylhexyl (meth)acrylate, octyl (meth)acrylate, ethyl (meth)acrylate, n-butyl (meth)acrylate, 2-methylbutyl (meth)acrylate, pentyl (meth)acrylate, heptyl (meth)acrylate, nonyl (meth)acrylate, 3-ethoxypropyl (meth)acrylate, 3-ethoxybutyl (meth)acrylate, dimethylaminoethyl (meth)acrylate, 2-hydroxyethyl (meth)acrylate, 2-hydroxybutyl (meth)acrylate, ethyl-$\alpha$-(hydroxymethyl) (meth)acrylate, dimethylaminoethyl (meth)acrylate, hydroxyethyl (meth)acrylate, hydroxypropyl (meth)acrylate, phenyl (meth)acrylate, benzyl (meth)acrylate, phenylethyl (meth)acrylate, diethylene glycol (meth)acrylate, triethylene glycol (meth)acrylate, polyethylene glycol (meth)acrylate, glycerol (meth)acrylate, bisphenol A (meth)acrylate, dimethyl maleate, diethyl maleate, vinyl acetate, and the like can be used individually or in combination. It should be noted that the "(meth)acrylate" indicates an acrylate or a methacrylate.

In the radical polymerization polymer, with respect to the structure formed by radical polymerization of the monomer, a polymer having a linear structure, a polymer having a branched (graft) structure, or a polymer having a crosslinked structure can be used. In each polymer, with respect to the monomer arrangement, there is no particular limitation, and a polymer of a random or block arrangement can be used.

With respect to the radical polymerization polymer, one having a weight average molecular weight in the range of 2,000 to 20,000 is preferably used, and the weight average molecular weight of the polymer is more preferably in the range of 5,000 to 20,000, further especially preferably in the range of 7,000 to 15,000 because the pigment (A) is unlikely to suffer aggregation or settling, so that the aqueous pigment dispersion is improved in storage stability and the discharge stability of the ink is further improved.

The above-mentioned weight average molecular weight is a value as measured by a GPC (gel permeation chromatography) method, in terms of a value converted to the molecular weight of polystyrene used as a standard material.

With respect to the radical polymerization polymer, the radical polymerization polymer having part of or all of the acid group thereof neutralized by a basic compound (neutralized polymer) is preferably used in view of obtaining excellent storage stability.

With respect to the basic compound, there can be used a hydroxide of an alkali metal, such as potassium or sodium; a carbonate of an alkali metal, such as potassium or sodium; a carbonate of an alkaline earth metal, such as calcium or barium; an inorganic basic compound, such as ammonium hydroxide, or an organic basic compound, e.g., an aminoalcohol, such as triethanolamine, N,N-dimethanolamine, N-aminoethylethanolamine, dimethylethanolamine, or N-N-butyldiethanolamine, a morpholine, such as morpholine, N-methylmorpholine, or N-ethylmorpholine, or a piperazine, such as N-(2-hydroxyethyl)piperazine or piperazine hexahydrate. Of these, with respect to the basic compound, an alkali metal hydroxide, such as potassium hydroxide, sodium hydroxide, or lithium hydroxide, is preferably used for reducing the viscosity of the aqueous pigment dispersion and further improving the storage stability and discharge stability of the ink-jet recording ink, and potassium hydroxide is especially preferably used.

The neutralization ratio of the radical polymerization polymer is not particularly limited, but is preferably in the range of 80 to 120% for suppressing aggregation of the radical polymerization polymer. In the invention, the neutralization ratio indicates a value calculated by the following formula.

$$\text{Neutralization ratio (\%)} = [\{\text{Mass (g) of the basic compound} \times 56.11 \times 1,000\}/\{\text{Acid value (mg KOH/g) of the radical polymerization polymer} \times \text{Equivalent of the basic compound} \times \text{Mass (g) of the radical polymerization polymer}\}] \times 100$$

When the basic compound is mixed with the pigment (A) and the like, the basic compound which is preliminarily dissolved or dispersed in a solvent, such as water, can be used.

In the aqueous pigment dispersion of the invention, the mass ratio between the pigment (A) and the pigment dispersing resin (B) [the pigment dispersing resin (B)/the pigment (A)] in the range of 0.1 to 0.7 can be appropriately selected, but, for achieving more excellent dispersibility and storage stability, the aqueous pigment dispersion wherein the mass ratio [the pigment dispersing resin (B)/the pigment (A)] is in the range of 0.1 to 0.4 is preferably used.

With respect to the water (C), pure water or ultrapure water, such as ion-exchanged water, ultrafiltered water, reverse-osmosed water, or distilled water, can be used. Further, with respect to the water (C), water sterilized by irradiation with an ultraviolet light or addition of hydrogen peroxide, or the like is preferably used because generation of fungi or bacteria can be prevented when the aqueous pigment dispersion, an ink using the same, or the like is stored for a long term.

The aqueous pigment dispersion of the invention has the above-mentioned components dissolved or dispersed in water.

Further, with respect to the aqueous pigment dispersion of the invention, the aqueous pigment dispersion containing a water-soluble organic solvent in addition to the pigment (A), pigment dispersing resin (B), and water (C) is preferably used in view of obtaining a pigment wetting effect.

With respect to the water-soluble organic solvent, glycols, such as ethylene glycol, diethylene glycol, triethylene glycol, tetraethylene glycol, propylene glycol, polyethylene glycol, and polypropylene glycol; diols, such as butanediol, pentanediol, hexanediol, and homologue diols thereof; glycol esters, such as propylene glycol laurate; glycol ethers, such as diethylene glycol monoethyl ether, diethylene glycol monobutyl ether, diethylene glycol monohexyl ether, propylene glycol ether, dipropylene glycol ether, and cellosolve containing triethylene glycol ether; alcohols, such as methanol, ethanol, isopropyl alcohol, 1-propanol, 2-propanol, 1-butanol, 2-butanol, pentyl alcohol, and homologue alcohols thereof; sulfolanes; lactones, such as γ-butyrolactone; lactams, such as N-(2-hydroxyethyl)pyrrolidone; glycerol and glycerol derivatives, such as glycerol having added polyoxyalkylene; and other various solvents known as water-soluble organic solvents can be used individually or in combination.

With respect to the water-soluble organic solvent, among those mentioned above, a polyhydric alcohol having a high boiling point, a low volatility, and a high surface tension, such as a glycol or a diol, is preferably used because it serves also as a wetting agent or a drying preventive agent, and a glycol, such as diethylene glycol or triethylene glycol, is more preferably used.

In the aqueous pigment dispersion of the invention, the mass ratio between the pigment (A) and the water-soluble organic solvent [the water-soluble organic solvent/the pigment (A)] in the range of 0.3 to 2.0 can be appropriately selected, but, for achieving more excellent dispersibility and storage stability, the aqueous pigment dispersion wherein the mass ratio [the water-soluble organic solvent/the pigment (A)] is in the range of 0.4 to 1.5 is preferably used.

The method for producing an aqueous pigment dispersion of the invention has the step of preparing a kneaded mixture containing a pigment (A) comprising C.I. Pigment Orange 43 (a) having a primary particle diameter of 150 nm or less and a pigment dispersing resin (B), and the step of mixing the kneaded mixture obtained in the above step and water (C) with each other.

First, the pigment (A) comprising C.I. Pigment Orange 43 (a) having a primary particle diameter of 150 nm or less and the pigment dispersing resin (B), and, if necessary, the above-mentioned basic compound and water-soluble organic solvent are fed to a vessel and kneaded with one another. The step for obtaining the kneaded mixture is not particularly limited, and can be conducted by a known dispersing method. For example, there can be mentioned media-mill dispersing methods using media, such as a paint shaker, a bead mill, a sand mill, and a ball mill; media-less dispersing methods using an ultrasonic homogenizer, a high-pressure homogenizer, a Nanomizer, an Ultimizer, or the like; and knead-dispersing methods, such as a roll mill, a Henschel mixer, a pressure kneader, an intensive mixer, a Banbury mixer, and a planetary mixer. Of these, the knead-dispersing method is preferred because it is a method in which strong shear force is applied using a kneading machine to the mixture containing the pigment (A) and having a high solids concentration to finely divide the pigment (A), and a kneaded mixture having a high pigment concentration can be obtained by the method, and the method is effective in reducing the coarse particles. In the knead-dispersing method, it is preferred that the mixture contains water in an amount of 50% by mass or less, based on the mass of the solids contained in the mixture, or that the mixture contains no water.

In the knead-dispersing method, with respect to the order of charging the materials for the mixture, there is no particular limitation, and all the materials may be charged at the same time and kneaded, or the individual materials may be charged portion by portion, and the order of charging the raw materials may be changed. The amounts of the raw materials charged can be in the above-mentioned respective ranges. When an aqueous basic compound solution obtained by preliminarily dissolving a basic compound in water is used as a basic compound to be incorporated, the amount of the water in the mixture is preferably determined taking into the consideration the amount of the water contained in the aqueous basic compound solution.

For obtaining merit of the knead-dispersing method that strong shear force is applied to the mixture, it is preferred that the mixture in a state of having a high solids content is kneaded, and higher shear force can be applied to the mixture in such a case. The solids content is preferably in the range of 20 to 100% by mass, more preferably in the range of 30 to 90% by mass, especially preferably in the range of 40 to 80% by mass because the viscosity of the mixture being kneaded can be kept appropriately high and thus the load exerted on the mixture by the kneading machine can be increased, so that satisfactory disintegration of the pigment in the mixture and coating of the pigment with the radical polymerization polymer can be more efficiently made.

The temperature for kneading can be appropriately controlled so that satisfactory shear force is applied to the kneaded mixture, taking into consideration temperature properties, such as the glass transition temperature of the radical polymerization polymer used. For example, when the radical polymerization polymer is a styrene-acrylic acid copolymer, kneading is preferably conducted at a temperature in a range such that the temperature is lower than the glass transition temperature and a difference between the temperature and the glass transition temperature is less than 50°C. By conducting kneading in such a temperature range, a disadvantage is not caused in that melting of the radical polymerization polymer due to a rise of the kneading temperature reduces the viscosity of the kneaded mixture to cause the shear force to be unsatisfactory.

The kneading apparatus used in the kneading step may be one which can generate high shear force with respect to a mixture having a high solids content, and can be selected from the above-mentioned known kneading apparatuses and used, but, rather than an open kneading machine having no stirring vessel, such as a two-roll, a kneading apparatus having a stirring vessel and an agitating blade and being capable of having the stirring vessel closed is preferably used.

Examples of such apparatuses include a Henschel mixer, a pressure kneader, a Banbury mixer, and a planetary mixer, and especially preferred are a planetary mixer and the like.

In the invention, kneading is conducted preferably in a state that the pigment concentration and the concentration of solids including the pigment and radical polymerization polymer are high, and therefore the viscosity of the kneaded mixture varies in a wide range depending on the state of the mixture being kneaded, and, as compared to a two-roll or the like, a planetary mixer enables a kneading treatment in a viscosity region in a wide range, and further enables addition of an aqueous medium and distilling the aqueous medium off under a reduced pressure, making it easy to control the viscosity and load shear force upon kneading.

In the step of dispersing the kneaded mixture obtained by kneading the mixture in water (C), for example, by using a kneading apparatus having a stirring vessel and an agitating blade and being capable of having the stirring vessel closed, water (C) can be added subsequently after kneading. In this step, if necessary, the above-mentioned water-soluble organic solvent may be used in combination with water.

The aqueous pigment dispersion obtained as mentioned above generally preferably has a pigment concentration controlled to be 10 to 50% by mass, which varies depending on the use of the dispersion, because dilution of the aqueous pigment dispersion when producing an ink is easy. When an ink is produced using the aqueous pigment dispersion, according to the desired ink application or physical properties, merely by appropriately adding a water-soluble solvent and/or water, or an additive to the aqueous pigment dispersion to dilute it so that the pigment concentration becomes 0.1 to 20% by mass, an ink can be obtained.

Further, in the above-mentioned method, when the aqueous pigment dispersion, though having a pigment concentration within the above range, has such a viscosity higher than the above range that it is difficult to handle the dispersion, the aqueous pigment dispersion can be diluted using water (C) or, if necessary, the above-mentioned water-soluble organic solvent so as to have a viscosity in a desired range.

Specifically, the aqueous pigment dispersion can be produced by, for example, producing a pigment kneaded mixture using a kneading machine having a stirring vessel as mentioned above, and then adding and mixing water (C) to the stirring vessel and, if necessary, stirring the resultant mixture to directly dilute the mixture. Alternatively, the aqueous pigment dispersion can be produced by mixing a pigment dispersion in the solid state and an aqueous medium by another agitator having an agitating blade and, if necessary, stirring the resultant mixture.

With respect to mixing water (C) into the mixture, all the required amount of water may be mixed into the pigment kneaded mixture at the same time, but it is preferred that the required amount of water is continuously or intermittently added because dilution with water (C) is efficiently made, so that the aqueous pigment dispersion can be produced in a shorter time.

Further, the obtained aqueous pigment dispersion may be further subjected to dispersion treatment by means of a dispersing machine. Examples of dispersing machines include a paint shaker, a bead mill, a roll mill, a sand mill, a ball mill, an attritor, a basket mill, a sand mill, a sand grinder, a Dyno-mill, a Dispermat, an SC mill, a spike mill, an agitator mill, a juice mixer, a high-pressure homogenizer, an ultrasonic homogenizer, a Nanomizer, a dissolver, a Disper, a high-speed impeller dispersing machine, a kneader, and a planetary mixer.

The particles contained in the aqueous pigment dispersion obtained by the above-mentioned method preferably have a volume average particle diameter of 50 to 300 nm, most preferably 80 to 180 nm in view of achieving excellent dispersibility and storage stability.

(Aqueous ink for ink-jet recording)

The aqueous pigment dispersion can be diluted so as to have a desired concentration and used in various applications, such as the fields of coating for automobile and building materials, the fields of printing inks including an offset ink, a gravure ink, a flexographic ink, and a silk screen ink, and the fields of ink for ink-jet recording.

When the aqueous pigment dispersion of the invention is applied to an ink for ink-jet recording, a water-soluble solvent and/or water, and a resin aimed for a binder, such as an acrylic resin or a polyurethane resin, are further added to the aqueous pigment dispersion, and, according to desired physical properties, if necessary, a drying preventive agent, a penetrating agent, a surfactant, or another additive is added to prepare an ink.

During or after the preparation of an ink, a centrifugal separation or filtration treatment step may be added. Examples

Hereinbelow, the present invention will be described in more detail with reference to the following Examples.

(Preparation of a pigment by solvent salt milling)

Into a kneader were charged 100 parts by mass of a pigment Orange A-76 (C.I. Pigment Orange 43, manufactured by Arimoto Chemical Co., Ltd.; primary particle diameter: 190 nm), 1,000 parts by mass of sodium chloride (water-soluble inorganic salt), and 200 parts by mass of diethylene glycol (water-soluble organic solvent).

The kneader jacket temperature was adjusted to 40°C, and then kneading (solvent salt milling) was conducted for 6 hours.

Then, the above-obtained kneaded mixture was removed and placed in a corrosion-resistant vessel, and then 10 L of a 0.5% by mass aqueous HCl solution was added, and the resultant mixture was stirred to obtain a composition having dissolved the sodium chloride and diethylene glycol.

Then, the obtained composition was subjected to filtration to collect a residue (pigment constituent). In this instance, the residue was washed with warm water and ion-exchanged water so that the sodium chloride and diethylene glycol did not remain in the residue. The collected residue was dried at 90°C for 32 hours or longer to completely remove the moisture, obtaining a dried material. The obtained dried material was ground by a juicer to obtain a pigment X having a primary particle diameter of 80 nm.

A pigment Y having a primary particle diameter of 90 nm was obtained by substantially the same method as mentioned above except that, instead of the pigment Orange A-76 (C.I. Pigment Orange 43, manufactured by Arimoto Chemical Co., Ltd.; primary particle diameter: 190 nm), PV FAST ORANGE GRL (C.I. Pigment Orange 43, manufactured by Clariant; primary particle diameter: 200 nm) was used.

The primary particle diameters of the pigments X and Y were measured and determined by the method described below.

A mixture of 1 part by mass of the pigment (A) comprising C.I. Pigment Orange 43(a) and 99 parts by mass of ethanol was first dropwise placed on a mesh having a collodion film and dried to obtain a sample for measurement.

Then, arbitrary 1,000 particles in the sample for measurement were observed using a scanning transmission electron microscope (STEM, JSM-7500FA, manufactured by JEOL Ltd.; accelerating voltage: 30 kV), and an average of the major diameters of the particles was taken as a primary particle diameter.

(Radical polymerization polymer A)

A radical polymerization polymer A is produced by solution polymerization and in a powder form (diameter: 1 mm or less), and has a monomer compositional ratio of styrene/acrylic acid/methacrylic acid/butyl acrylate = 83.00/7.35/9.55/0.10 (mass ratio), a weight average molecular weight of 11,000, an acid value of 120 mg KOH/g, and a glass transition temperature of 120°C.

(Radical polymerization polymer B)

A radical polymerization polymer B is produced by solution polymerization and in a powder form (diameter: 1 mm or less), and has a monomer compositional ratio of styrene/acrylic acid = 87.70/12.30 (mass ratio), a weight average molecular weight of 8,000, an acid value of 90 mg KOH/g, and a glass transition temperature of 103°C.

(Radical polymerization polymer C)

A radical polymerization polymer C is produced by solution polymerization and in a powder form (diameter: 1 mm or less), and has a monomer compositional ratio of styrene/acrylic acid/methacrylic acid/butyl acrylate = 76.92/9.99/12.99/0.10 (mass ratio), a weight average molecular weight of 8,000, an acid value of 150 mg KOH/g, and a glass transition temperature of 121°C.

(Radical polymerization polymer D)

A radical polymerization polymer D is produced by solution polymerization and in a powder form (diameter: 1 mm or less), and has a monomer compositional ratio of styrene/acrylic acid/methacrylic acid/butyl acrylate = 72.00/12.13/15.77/0.10 (mass ratio), a weight average molecular weight of 8,000, an acid value of 180 mg KOH/g, and a glass transition temperature of 113°C.

(Radical polymerization polymer E)

A radical polymerization polymer E is produced by solution polymerization and in a powder form (diameter: 1 mm or less), and has a monomer compositional ratio of styrene/acrylic acid/butyl acrylate = 90.40/9.50/0.10 (mass ratio), a weight average molecular weight of 8,000, an acid value of 70 mg KOH/g, and a glass transition temperature of 98°C.

The weight average molecular weight in the invention is a value as measured by a GPC (gel permeation chromatography) method, in terms of a value converted to the molecular weight of polystyrene used as a standard material. The measurement was conducted using the apparatus under the conditions shown below.

    Feed pump: LC-9A
    System controller: SLC-6B

Auto-injector: S1L-6B
Detector: RID-6A

These are manufactured by Shimadzu Corporation.

Data processing soft: Sic 480 II Data Station (manufactured by System Instruments Co., Ltd.).
Column: GL-R400 (guard column) + GL-R440 + GL-R450 + GL-R400M (manufactured by Hitachi Chemical Co., Ltd.)
Eluent solvent: Tetrahydrofuran (THF)
Elution flow rate: 2 ml/min
Column temperature: 35°C

(Example 1 Method for producing an aqueous pigment dispersion)

3.75 Parts by mass of a radical polymerization polymer A and 15 parts by mass of the pigment X were charged into a planetary mixer (trade name: Chemical Mixer ACM04LVTJ-B; manufactured by Aicohsha Mfg. Co., Ltd.), and a jacket was heated and, after the temperature of the contents reached 80°C, kneading was conducted at a speed of rotation: 80 rotations/minute and at a speed of revolution: 25 revolutions/minute. After 5 minutes, 12 parts by mass of triethylene glycol as a solvent and 1.32 parts by mass of a 34% by mass aqueous potassium hydroxide solution were added.

Kneading was continued until a time when 60 minutes had passed after a current of the planetary mixer was the maximum current value, obtaining a kneaded mixture. The ratio of the radical polymerization polymer A to the pigment X (R/P) was 0.25, and the ratio of the solvent to the pigment X (S/P) was 0.80.

15 Parts by mass of ion-exchanged water was added to and mixed into the obtained kneaded mixture so that the mixture was diluted with and dispersed in the ion-exchanged water. Further, 0.30 parts by mass of Carbowet GA-211 (manufactured by Air Products Japan K.K.) as a surfactant and ion-exchanged water were added and mixed so that the mixture was diluted, obtaining an aqueous pigment dispersion having a Pigment Orange 43 concentration of 15% by mass.

(Example 2)

An aqueous pigment dispersion was obtained by substantially the same method as in Example 1 except that, instead of 3.75 parts by mass of the radical polymerization polymer A, 3.75 parts by mass of a radical polymerization polymer B was used, and that the amount of the 34% by mass aqueous potassium hydroxide solution used was changed from 1.32 parts by mass to 0.99 parts by mass. The ratio of the mass of the radical polymerization polymer B to the mass of the pigment X (R/P) was 0.25, and the ratio of the mass of the solvent to the mass of the pigment X (S/P) was 0.80.

(Example 3)

An aqueous pigment dispersion was obtained by substantially the same method as in Example 1 except that, instead of 3.75 parts by mass of the radical polymerization polymer A, 3.75 parts by mass of a radical polymerization polymer C was used, and that the amount of the 34% by mass aqueous potassium hydroxide solution used was changed from 1.32 parts by mass to 1.65 parts by mass. The ratio of the mass of the radical polymerization polymer C to the mass of the pigment X (R/P) was 0.25, and the ratio of the mass of the solvent to the mass of the pigment X (S/P) was 0.80.

(Example 4)

An aqueous pigment dispersion was obtained by substantially the same method as in Example 1 except that, instead of 12 parts by mass of triethylene glycol, 12 parts by mass of 2-pyrrole was used. The ratio of the mass of the radical polymerization polymer A to the mass of the pigment X (R/P) was 0.25, and the ratio of the mass of the solvent to the mass of the pigment X (S/P) was 0.80.

An aqueous pigment dispersion was obtained by substantially the same method as in Example 1 except that, instead of 15 parts by mass of the pigment X, 15 parts by mass of a pigment Y was used. The ratio of the mass of the radical polymerization polymer A to the mass of the pigment Y (R/P) was 0.25, and the ratio of the mass of the solvent to the mass of the pigment Y (S/P) was 0.80.

(Example 6)

An aqueous pigment dispersion was obtained by substantially the same method as in Example 1 except that, instead of 12 parts by mass of triethylene glycol, 12 parts by mass of LEG-1 (polyoxyethylene glycerol, manufactured by LIPO CHEMICALS INC) was used. The ratio of the mass of the radical polymerization polymer A to the mass of the pigment X (S/P) was 0.25, and the ratio of the mass of the solvent to the mass of the pigment X (R/S) was 0.80.

(Example 7)

An aqueous pigment dispersion was obtained by substantially the same method as in Example 1 except that the amount of the radical polymerization polymer A used was changed from 3.75 parts by mass to 1.50 parts by mass, and that the amount of the 34% by mass aqueous potassium hydroxide solution used was changed from 1.32 parts by mass to 0.53 parts by mass. The ratio of the mass of the radical polymerization polymer A to the mass of the pigment X (R/P) was 0.10, and the ratio of the mass of the solvent to the mass of the pigment X (S/P) was 0.80.

(Example 8)

An aqueous pigment dispersion was obtained by substantially the same method as in Example 1 except that the amount of the radical polymerization polymer A used was changed from 3.75 parts by mass to 10.5 parts by mass, and that the amount of the 34% by mass aqueous potassium hydroxide solution used was changed from 1.32 parts by mass to 3.76 parts by mass. The ratio of the mass of the radical polymerization polymer A to the mass of the pigment X (R/P) was 0.70, and the ratio of the mass of the solvent to the mass of the pigment X (S/P) was 0.80.

(Example 9)

An aqueous pigment dispersion was obtained by substantially the same method as in Example 1 except that the amount of the triethylene glycol used was changed from 12 parts by mass to 6 parts by mass. The ratio of the mass of the radical polymerization polymer A to the mass of the pigment X (R/P) was 0.25, and the ratio of the mass of the solvent to the mass of the pigment X (S/P) was 0.40.

(Example 10)

An aqueous pigment dispersion was obtained by substantially the same method as in Example 1 except that the amount of the triethylene glycol used was changed from 12 parts by mass to 18 parts by mass. The ratio of the mass of the radical polymerization polymer A to the mass of the pigment X (R/P) was 0.25, and the ratio of the mass of the solvent to the mass of the pigment X (S/P) was 1.20.

(Comparative Example 1)

An aqueous pigment dispersion was obtained by substantially the same method as in Example 1 except that, instead of 15 parts by mass of the pigment X, 15 parts by mass of "A-76" (C.I. Pigment Orange 43, manufactured by Arimoto Chemical Co., Ltd.; primary particle diameter: 300 nm) which has not been subjected to the solvent milling treatment was used. The ratio of the mass of the radical polymerization polymer A to the mass of "A-76" (R/P) was 0.25, and the ratio of the mass of the solvent to the mass of "A-76" (S/P) was 0.80.

(Comparative Example 2)

An aqueous pigment dispersion was obtained by substantially the same method as in Example 1 except that, instead of 15 parts by mass of the pigment X, 15 parts by mass of "A-76" (C.I. Pigment Orange 43, manufactured by Arimoto Chemical Co., Ltd.; primary particle diameter: 300 nm) which has not been subjected to the solvent milling treatment was used, that, instead of 3.75 parts by mass of the radical polymerization polymer A, 3.75 parts by mass of a radical polymerization polymer D was used, and that the amount of the 34% by mass aqueous potassium hydroxide solution used was changed from 1.32 parts by mass to 1.99 parts by mass. The ratio of the mass of the radical polymerization polymer D to the mass of "A-76" (R/P) was 0.25, and the ratio of the mass of the solvent to the mass of "A-76" (S/P) was 0.80.

(Comparative Example 3)

An aqueous pigment dispersion was obtained by substantially the same method as in Example 1 except that, instead of 3.75 parts by mass of the radical polymerization polymer A, 3.75 parts by mass of a radical polymerization polymer D was used, and that the amount of the 34% by mass aqueous potassium hydroxide solution used was changed from 1.32 parts by mass to 1.99 parts by mass. The ratio of the mass of the radical polymerization polymer D to the mass of the pigment X (R/P) was 0.25, and the ratio of the mass of the solvent to the mass of the pigment X (S/P) was 0.80.

(Comparative Example 4)

An aqueous pigment dispersion was obtained by substantially the same method as in Example 1 except that, instead of 3.75 parts by mass of the radical polymerization polymer A, 3.75 parts by mass of a radical polymerization polymer E was used, and that the amount of the 34% by mass aqueous potassium hydroxide solution used was changed from 1.32 parts by mass to 0.77 parts by mass. The ratio of the mass of the radical polymerization polymer E to the mass of the pigment X (R/P) was 0.25, and the ratio of the mass of the solvent to the mass of the pigment X (S/P) was 0.80.

(Evaluation of the aqueous pigment dispersion)

[Method for measuring a volume average particle diameter]

The aqueous pigment dispersions prepared in the Examples and Comparative Examples were first individually diluted with ion-exchanged water to a 1/2,000 concentration.
Then, about 4 ml of the diluted aqueous pigment dispersion was placed in a cell, and a volume average particle diameter (MV) was measured using Nanotrac Particle Size Distribution Analyzer "UPA150", manufactured by MicrotracBEL Corp., by detecting a scattered light of laser in an environment at 25°C.
The volume average particle diameter was measured three times, and a value determined from an average of the three measured values by taking the upper two digits of the average as significant figures was taken as a value of volume average particle diameter (unit: nm). When the volume average particle diameter was 190 or less, it was judged excellent.

[Method for measuring the number of coarse particles]

The aqueous pigment dispersions prepared in the Examples and Comparative Examples were first individually diluted with ion-exchanged water to a 1/50 concentration.
Then, using a particle count-type particle size distribution analyzer (Accusizer 780 APS), manufactured by Particle Sizing Systems, the number of the particles having a diameter of 0.5 $\mu$m or more contained in the diluted aqueous pigment dispersion was measured three times.
Subsequently, the measured values were individually multiplied by the dilution concentration to determine values of the number of coarse particles. Then, an average of the three values of the number of coarse particles determined by the above method was taken as the number of coarse particles of each of the aqueous pigment dispersions prepared in the Examples and Comparative Examples.

(Test method for the storage stability of an aqueous pigment dispersion)

With respect to the aqueous pigment dispersions immediately after produced in the Examples and Comparative Examples, the number of coarse particles was first measured by the same method as described above in the [Method for measuring the number of coarse particles].
Then, the aqueous pigment dispersions obtained in the Examples and Comparative Examples were individually sealed in a polypropylene container, and stored at 60°C for 4 weeks, and then the number of coarse particles of the resultant dispersion was measured by the same method as in the [Method for measuring the number of coarse particles].
Then, a change ratio of the number of coarse particles was calculated from the number of coarse particles of the aqueous pigment dispersion immediately after produced and the number of coarse particles of the aqueous pigment dispersion after stored, based on the formula: Change ratio (%) = [(The number of coarse particles of the aqueous pigment dispersion after stored - The number of coarse particles of the aqueous pigment dispersion immediately after produced) /The number of coarse particles of the aqueous pigment dispersion immediately after produced] $\times$ 100. When the change ratio was 10% or less, the storage stability was judged excellent.

(Test method for the dispersibility of an aqueous pigment dispersion)

With respect to the aqueous pigment dispersions immediately after produced in the Examples and Comparative Examples, 30 ml of the dispersion was poured into a glass test tube and allowed to stand in a stable place at room temperature, and, after 2 weeks, the upper portion of the solution was observed.

○: The upper portion of the dispersion is not changed in color and not separated.

×: The upper portion of the dispersion is changed in color or separated into two layers.

[Table 1]

|  | Example 1 | Example 2 | Example 3 | Example 4 | Example 5 |
|---|---|---|---|---|---|
| Pigment | X | X | X | X | Y |
| Primary particle diameter (nm) of pigment | 80 | 80 | 80 | 80 | 90 |
| Radical polymerization polymer | A | B | C | A | A |
| Acid value of radical polymerization polymer | 120 | 90 | 150 | 120 | 120 |
| [Pigment/Radical polymerization polymer] (Mass ratio) | 0.25 | 0.25 | 0.25 | 0.25 | 0.25 |
| Water-soluble organic solvent | Triethylene glycol | Triethylene glycol | Triethylene glycol | 2-Pyrrole | Triethylene glycol |
| [Water-soluble organic solvent/ Pigment] (Mass ratio) | 0.8 | 0.8 | 0.8 | 0.8 | 0.8 |
| Volume average particle diameter (nm) | 151 | 153 | 169 | 135 | 160 |
| Number of coarse partides ($\times 10^6$/ml) | 70 | 300 | 280 | 25 | 700 |
| Dispersibility | ○ | ○ | ○ | ○ | ○ |
| Storage stability (Coarse particle number change ratio) | 7.3% | 6.9% | 8.3% | 9.4% | 9.8% |

[Table 2]

|  | Example 6 | Example 7 | Example 8 | Example 9 | Example 10 |
|---|---|---|---|---|---|
| Pigment | X | X | X | X | X |
| Primary particle diameter (nm) of pigment | 80 | 80 | 80 | 80 | 80 |
| Radical polymerization polymer | A | A | A | A | A |

(continued)

|  | Example 6 | Example 7 | Example 8 | Example 9 | Example 10 |
|---|---|---|---|---|---|
| Acid value of radical polymerization polymer | 120 | 90 | 150 | 120 | 120 |
| [Pigment/Radical polymerization polymer] (Mass ratio) | 0.25 | 0.10 | 0.70 | 0.25 | 0.25 |
| Water-soluble organic solvent | LEG-1 | Triethylene glycol | Triethylene glycol | Triethylene glycol | Triethylene glycol |
| [Water-soluble organic solvent/ Pigment] (Mass ratio) | 0.8 | 0.8 | 0.8 | 0.4 | 1.2 |
| Volume average particle diameter (nm) | 142 | 149 | 166 | 143 | 171 |
| Number of coarse particles ($\times 10^6$/ml) | 70 | 100 | 120 | 80 | 100 |
| Dispersibility | ○ | ○ | ○ | ○ | ○ |
| Storage stability (Coarse particle number change ratio) | 3.9% | 4.2% | 6.3% | 5.1% | 8.0% |

[Table 3]

|  | Comparative Example 1 | Comparative Example 2 | Comparative Example 3 | Comparative Example 4 |
|---|---|---|---|---|
| Pigment | A-76 | A-76 | X | X |
| Primary particle diameter (nm) of pigment | 190 | 190 | 80 | 80 |
| Radical polymerization polymer | A | D | D | E |
| Acid value of radical polymerization polymer | 120 | 180 | 180 | 70 |
| [Pigment/Radical polymerization polymer] (Mass ratio) | 0.25 | 0.25 | 0.25 | 0.25 |
| Water-soluble organic solvent | Triethylene glycol | Triethylene glycol | Triethylene glycol | Triethylene glycol |
| [Water-soluble organic solvent/Pigment] (Mass ratio) | 0.8 | 0.8 | 0.8 | 0.8 |
| Volume average particle diameter (nm) | 320 | 284 | 163 | 196 |

(continued)

|  | Comparative Example 1 | Comparative Example 2 | Comparative Example 3 | Comparative Example 4 |
|---|---|---|---|---|
| Number of coarse partides ($\times 10^6$/ml) | 4000 | 3600 | 260 | 3200 |
| Dispersibility | ○ | × | × | × |
| Storage stability (Coarse particle number change ratio) | 18.3% | 19.3% | 6.6% | 14.5% |

**Claims**

1. An aqueous pigment dispersion comprising: a pigment (A) comprising C. I. Pigment Orange 43(a) having a primary particle diameter of 150 nm or less; a pigment dispersing resin (B) comprising a radical polymerization polymer having an acid value of 80 to 150 mg KOH/g; and water (C).

2. The aqueous pigment dispersion according to claim 1, wherein the pigment dispersing resin (B) is a radical polymerization polymer having a structural unit derived from styrene, wherein the mass proportion of the structural unit derived from styrene in the radical polymerization polymer is 50% by mass or more.

3. The aqueous pigment dispersion according to claim 1 or 2, wherein the mass ratio between the pigment (A) and the pigment dispersing resin (B) [the pigment dispersing resin (B)/the pigment (A)] is in the range of 0.1 to 0.7.

4. The aqueous pigment dispersion according to any one of claims 1 to 3, further comprising a water-soluble organic solvent, wherein the mass ratio between the pigment (A) and the water-soluble organic solvent [the water-soluble organic solvent/the pigment (A)] is in the range of 0.3 to 2.0.

5. A method for producing an aqueous pigment dispersion, the method comprising: the step [1] of subjecting C.I. Pigment Orange 43 having a primary particle diameter of more than 150 nm to salt milling treatment to prepare C.I. Pigment Orange 43(a) having a primary particle diameter of 150 nm or less; the step [2] of preparing a kneaded mixture comprising a pigment (A) comprising the C.I. Pigment Orange 43(a) having a primary particle diameter of 150 nm or less obtained in the step [1] and a pigment dispersing resin (B); and the step [3] of mixing the kneaded mixture obtained in the step [2] and water (C) with each other.

## INTERNATIONAL SEARCH REPORT

International application No.

PCT/JP2018/007722

**A. CLASSIFICATION OF SUBJECT MATTER**
Int. Cl. C09D17/00(2006.01)i, C09D11/322(2014.01)i

According to International Patent Classification (IPC) or to both national classification and IPC

**B. FIELDS SEARCHED**

Minimum documentation searched (classification system followed by classification symbols)
Int. Cl. C09D1/00-201/10

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2006-152145 A (DAINIPPON INK AND CHEMICALS, | 1-4 |
| A | INC.) 15 June 2006, comparative example 3 (Family: none) | 5 |
| X | JP 2012-172070 A (DIC CORP.) 10 September 2012, claims 1-3, paragraphs [0013]-[0016], [0026], [0034], [0035], [0052], [0053], [0057], examples 2-5 (Family: none) | 1-5 |
| X | JP 2003-55571 A (MIKUNI COLOR LTD.) 26 February | 1, 3-4 |
| A | 2003, claims 1, 7, 9, paragraphs [0014], [0017], [0023], [0038]-[0040], examples 2-5 (Family: none) | 2, 5 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18.05.2018 | 29.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/007722 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2015-6795 A (SEIKO EPSON CORP.) 15 January 2015, claim 1, paragraphs [0039], [0047], [0056], [0060], [0066], [0068], [0071], composition 4 & US 2009/0295847 A1, claim 1, paragraphs [0053], [0061], [0071], [0075], [0081], [0083], [0089], example 4 | 1-4<br>5 |
| X<br>A | JP 11-199783 A (DAINIPPON INK & CHEMICALS, LTD.) 27 July 1999, claims 1, 5, paragraphs [0020], [0047], [0054], synthesis example 1, example 1 (Family: none) | 1-4<br>5 |
| X<br>A | WO 2015/198422 A1 (DAINICHISEIKA COLOR & CHEMICALS MFG. CO., LTD.) 30 December 2015, paragraphs [0090], [0125], example 14, application example 12 & US 2017/0166665 A1, paragraphs [0104], [0139], example 14, Application Example 12 & EP 3162825 A1 & KR 10-2017-0005040 A & CN 106459325 A | 5<br>1-4 |
| X<br>A | JP 2013-166867 A (DAINICHISEIKA COLOR & CHEMICALS MFG. CO., LTD.) 29 August 2013, claims 1-2, paragraphs [0037], [0044], [0049], example 1 & US 2015/0011687 A1, claims 1-2, paragraphs [0045], [0053], [0058], example 1 & EP 2816088 A1 & CN 104114654 A & KR 10-2014-0126382 A | 5<br>1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 199905230 A